# EUROPEAN PATENT SPECIFICATION

(11) **EP 3 141 416 B1**
(45) Date of publication and mention of the grant of the patent: **26.12.2018**
(21) Application number: 16188122.2
(22) Date of filing: 09.09.2016
(51) Int. Cl.: B60L 11/18

(54) **FIXING DEVICE, CHARGING SYSTEM USING THE SAME, FIXING METHOD THEREOF AND WHEEL AXIS KITS THEREOF**
BEFESTIGUNGSVORRICHTUNG, LADESYSTEM DAMIT, BEFESTIGUNGSVERFAHREN DAFÜR UND RADACHSSÄTZE DAFÜR
DISPOSITIF DE FIXATION, SYSTÈME DE CHARGE UTILISANT CELUI-CI, SON PROCÉDÉ DE FIXATION ET LEURS KITS D'AXE DE ROUE

(30) Priority: 10.09.2015 US 201562216393 P; 04.02.2016 TW 105103770; 07.09.2016 TW 105128056
(43) Date of publication of application: 15.03.2017
(73) Proprietor: Industrial Technology Research Institute, Chutung Hsinchu 31040, Taiwan (TW); Kwang Yang Motor Co., Ltd., Kaohsiung City 80794 (TW); Rotasun Mechanical Industry Co., Ltd., New Taipei City (TW)
(72) Inventor: Lin, Yu-Hung, 234 Taiwan (TW); Jang Suen, Shiow-Huey, 310 Taiwan (TW); Lin, Bing-Ming, 300 Taiwan (TW); Chen, Hsin-Ta, 236 Taiwan (TW); Pan, Wen-Chieh, 236 Taiwan (TW); Su, Chuan-Ming, Kaohsiung City 802 (TW)
(74) Representative: dompatent von Kreisler Selting Werner - Partnerschaft von Patent- und Rechtsanwälten mbB

(56) References cited:
- EP-A2- 2 325 071
- WO-A1-2010/148506
- WO-A1-2015/068221
- CN-A- 101 284 523
- CN-U- 202 489 885
- DE-A1-102010 028 626
- JP-A- 2003 079 006
- JP-B2- 3 059 937
- US-A1- 2014 070 767

## Description

### TECHNICAL FIELD

The disclosure relates in general to a fixing device, a charging system using the same, a fixing method thereof and a wheel axis kit thereof, and relates to a fixing device for an electric vehicle, a charging system using the same, a fixing method thereof and a wheel axis kit thereof.

### BACKGROUND

The electric vehicle mounts a battery. When power of the battery runs out, it is requested that a person consciously operates a charger at home or at a charging station to charge the battery, or replaces the battery in a swap station. However, the power of the electric vehicle often runs out because the consumer does not let the battery be charged regularly or forgets to let the battery be charged, and thus the consumer feels range anxiety.

Therefore, a solution of the electric vehicle being automatically charged after being parked is needed.

EP 2 325 071 (A2) discloses an arrangement which has a stationary charging device with a charging contact that is arranged at a holder. The charging contact is electrically connected with contact elements at an electric vehicle. The contact elements are arranged at a hub of a wheel of the electric vehicle. The charging contact is arranged at the holder at the bottom of recesses that are formed for insertion of ends of the hub of the wheel. The charging contact is formed as a spring contact. A pivoting body or a sliding body is arranged at the recesses.

JP3059937 B discloses a charging system for a motor-driven vehicle. A charging stand is provided with a charging circuit, which generates a charging current and jacks, which outputs the charging current from this charging circuit to a motor-driven bicycle.

US2014070767 (A1) relates to systems and methods for charging a vehicle. A vehicle and charging station can be designed such that an electric or hybrid vehicle can operate in a fashion similar to a conventional vehicle by being opportunity charged throughout a known route.

CN 101284523 (A) relates to an electric-bicycle stopping charging accounting device.

JP 2003 079006 A relates to an inductive charging system for charging an electric bicycle comprising a clamping device for the wheel of the electric bicycle. WO2010148506 relate to a fixing and charging device for contacting and fixing an axle of an electric bicycle on both ends of a wheel axle for charging the bicycle.

### SUMMARY

The invention is defined by the claims. According to one embodiment, a fixing device is provided. The fixing device includes a first clamping arm, a conductive portion and a driving mechanism. The first clamping arm has a first recess. The conductive portion is disposed within the first recess. The driving mechanism is connected to the first clamping arm for driving the first clamping arm.

According to another embodiment, a charging system is provided. The charging system includes a fixing device as mentioned above, a tire sensor and a charging terminal controller. The tire sensor is configured to sense whether a wheel axis kit of an electric vehicle enters a scope of the first recess of the first clamping arm of the fixing device. The charging terminal controller is electrically connected to the conductive portion, wherein if the wheel axis kit enters the scope of the first recess of the first clamping arm of the fixing device, the charging terminal controller controls the driving mechanism to fix the wheel axis kit within the first recess.

According to another embodiment, a wheel axis kit is provided. The wheel axis kit includes a conductive cover, a first insulation washer, a second insulation washer and an electric transmitting wire. The conductive cover has a first end surface and a second end surface opposite to the first end surface. The first insulation washer is disposed on the first end surface of the conductive cover. The second insulation washer is disposed on the second end surface of the conductive cover. The electric transmitting wire is electrically connected to the conductive cover.

According to another embodiment, a fixing method is provided. The fixing method includes the following steps. A charging system as mentioned above is provided. The tire sensor senses whether the wheel axis kit of an electric vehicle enters a scope of the first recess of the first clamping arm of the fixing device. When the wheel axis kit enters the scope of the first recess of the first clamping arm of the fixing device, the charging terminal controller controls the driving mechanism to fix the wheel axis kit within the first recess.

### BRIEF DESCRIPTION OF THE DRAWINGS

FIG. 1 is a flow chart of a fixing method of a charging system according to an embodiment of the present disclosure;
FIG. 2A illustrates a diagram view of the charging system according to an embodiment of the present disclosure;
FIG. 2B illustrates a side view of the fixing device of the charging system of FIG. 2A;
FIG. 3A illustrates a local cross sectional view of the electric vehicle according to an embodiment of the present disclosure;
FIG. 3B illustrates a cross sectional view of the wheel axis kit of FIG. 3A along a direction 3B-3B';
FIG. 4A illustrates a diagram view of the electric vehicle entering to the scope between the first clamping arm and the second clamping arm of the fixing device;
FIG. 4B illustrates a local top view of the fixing device and the electric vehicle of FIG. 4A;
FIG. 5 illustrates a diagram view of the fixing device clamping the wheel axis kit;
FIG. 6 illustrates a loop of two the first conductive portion of two the fixing device, the charging terminal controller and the vehicle terminal controller;
FIG. 7 illustrates a local diagram view of the fixing device according to another embodiment of the present disclosure;
FIG. 8 illustrates a local diagram view of the fixing device according to another embodiment of the present disclosure;
FIG. 9 illustrates a top view of a charging system connecting to the electric vehicle according to another embodiment of the present disclosure;
FIG. 10 illustrates a top view of a charging system connecting to the electric vehicle according to another embodiment of the present disclosure;
FIG. 11 illustrates a top view of the charging system according to another embodiment of the present disclosure;
FIG. 12 illustrates a side view of the charging system according to another embodiment of the present disclosure;
FIGS. 13 and 14 illustrate side views of a charging system according to another embodiment of the present disclosure;
FIGS. 15 and 16 illustrate top views of the charging system according to another embodiment of the present disclosure;
FIGS. 17 and 18 illustrate top views of a charging system according to another embodiment of the present disclosure;
FIG. 19 illustrates a side view of a charging system according to another embodiment of the present disclosure;
FIGS. 20 and 21 illustrate a side view of a fixing device according to another embodiment of the present disclosure;
FIG. 22 illustrates a side view of a fixing device according to another embodiment of the present disclosure; and
FIG. 23 illustrates a side view of a fixing device according to another embodiment of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

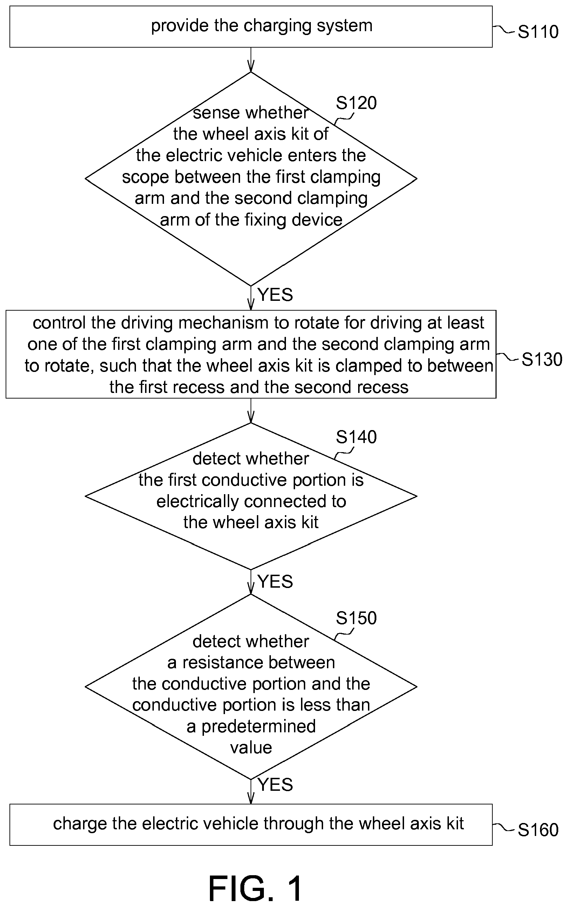

FIG. 1 is a flow chart of a fixing method of a charging system 100 according to an embodiment of the present disclosure.

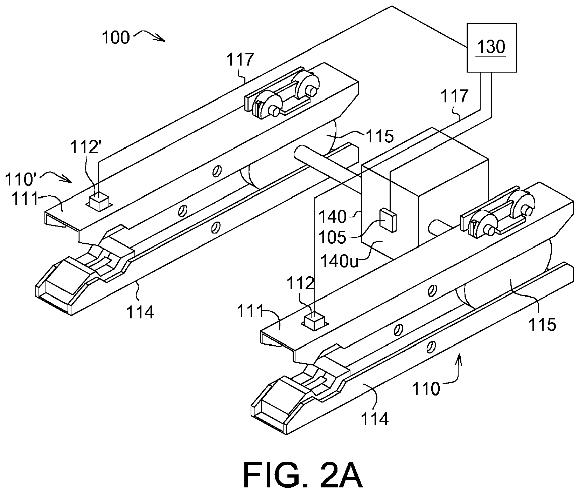

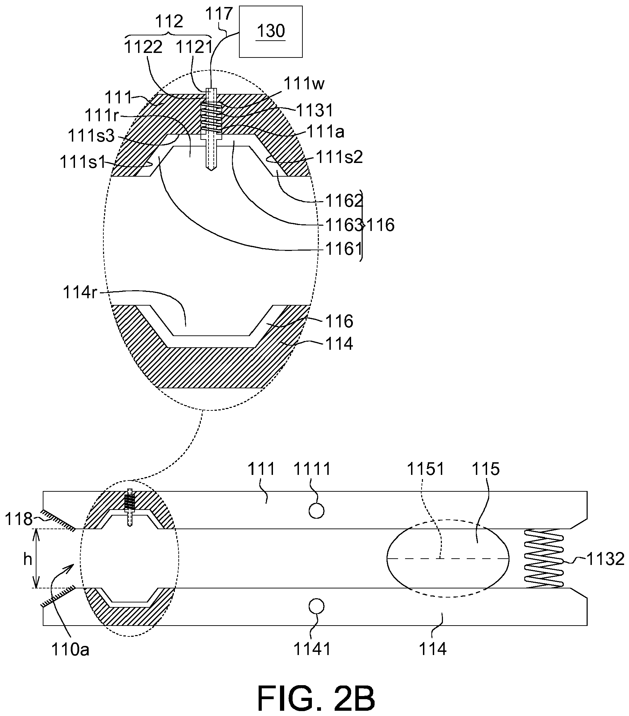

In step S110, the charging system 100 is provided. Referring to FIGS. 2A and 2B, FIG. 2A illustrates a diagram view of the charging system 100 according to an embodiment of the present disclosure, and FIG. 2B illustrates a side view of the fixing device 110 of the charging system 100 of FIG. 2A.

The charging system 100 includes a tire sensor 105, a fixing device 110, a fixing device 110', a charging terminal controller 130 and a block body 140, wherein the charging terminal controller 130 may be integrated into the block body 140 or disposed outside the block body 140.

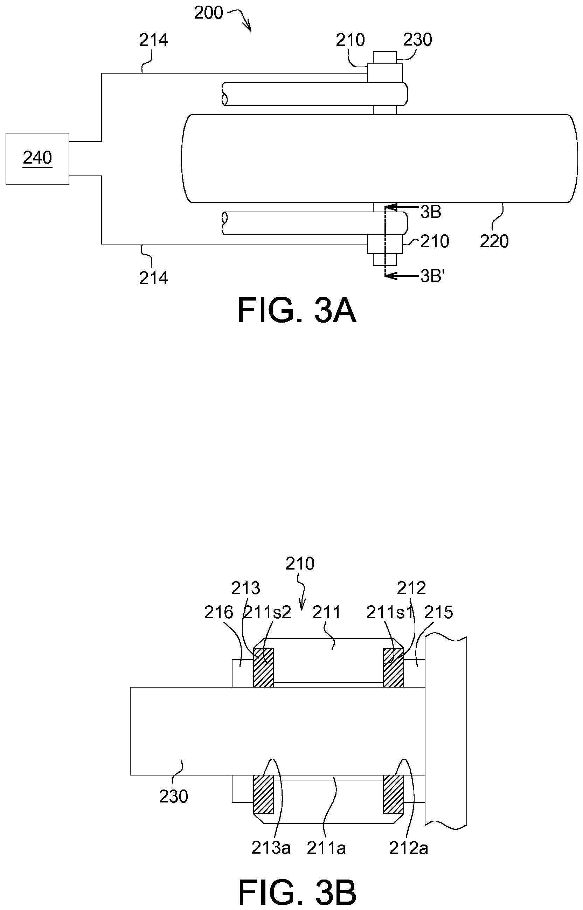

The tire sensor 105 is disposed on a front surface 140u of the block body 140 for sensing whether a wheel axis kit 210 (as illustrated in FIG. 3A) of an electric vehicle 200 (as illustrated in FIG. 3A) enters a scope of the fixing device 110. The electric vehicle 200 of the disclosure is, for example, a one-wheel electric vehicle, a two-wheel electric vehicle, a three-wheel electric vehicle, a four-wheel electric vehicle or an electric vehicle whose the number of wheels are other value.

In an embodiment, when the block body 140 is movable, the charging system 100 further includes a hydraulic shock absorber (not illustrated) connected to a rear surface (not illustrated) of the block body 140 for receiving the impacting force. In the present embodiment, the tire sensor 105 is disposed on the rear surface of the block body 140 and senses whether the wheel axis kits 210 of the electric vehicle 200 (illustrated in FIG. 3A) enters the fixing device 110 when the block body 140 moves to a suitable position to trigger the tire sensor 105.

In the present embodiment, the tire sensor 105 may be a mechanical switch, for example, a limit switch. The mechanical switch senses whether the wheel axis kit 210 enters the scope of the fixing device 110 by way of contacting. In another embodiment, the tire sensor 105 may be an optical sensor or an ultrasonic sensor which may sense whether the wheel axis kit 210 enters the scope of the fixing device 110 by way of non-contacting.

The fixing devices 100 and 110' connect to the block body 140 and are located at opposite two sides of the tire sensor 105 respectively. The number of the fixing device 110 of the present embodiment is, for example, two. In another embodiment, the number of the fixing device 110 may be one. The structure of the fixing device 110 will be described below. The structure of the fixing device 110' is similar to that of the fixing device 110, and similarities are not repeated here.

As illustrated in FIGS. 2A and 2B, the fixing device 110 includes a first clamping arm 111, a first conductive portion 112, a first elastic element 1131, a second elastic element 1132, a second clamping arm 114, a driving mechanism 115, an insulation element 116, a first electric transmitting wire 117 and a cleaning element 118.

In the present embodiment, the first clamping arm 111 is located above the driving mechanism 115, and the second clamping arm 114 is located below the driving mechanism 115. In another embodiment, the first clamping arm 111 is located below the driving mechanism 115, and the second clamping arm 114 is located above the driving mechanism 115. In addition, the first clamping arm 111 and/or the second clamping arm 114 is, for example, a conductive clamping arm or an insulation clamping arm.

The first clamping arm 111 has a first recess 111r, and the first conductive portion 112 is disposed within the first recess 111r. The first conductive portion 112 is configured to electrically connect to the wheel axis kit 210 (as illustrated in FIG. 3A) of the electric vehicle 200 (as illustrated in FIG. 3A).

The first clamping arm 111 has a sliding hole 111a, and the first conductive portion 112 may be movably disposed within the sliding hole 111a. For example, the first elastic element 1131 is disposed within the sliding hole 111a and connects the first conductive portion 112 to a bottom surface 111w of the sliding hole 111a. Since the first elastic element 1131 has flexibility, the first conductive portion 112 may move up and down within the sliding hole 111a.

As illustrated in FIG. 2B, the first conductive portion 112 may be a multi-layered structure. For example, the first conductive portion 112 includes a conductive probe 1121 and an insulation layer 1122, wherein the conductive probe 1121 is configured to electrically connect to the wheel axis kit 210 (as illustrated in FIG. 3A), and the insulation layer 1122 covers the conductive probe 1121 for preventing the conductive probe 1121 from being electrically contacting with the first clamping arm 111. The first electric transmitting wire 117 may electrically connect to the conductive probe 1121 and extend to outside the first clamping arm 111 to electrically connect to the charging terminal controller 130.

The second clamping arm 114 has a second recess 114r. The wheel axis kit 210 (as illustrated in FIG. 3A) of the electric vehicle 200 may be clamped between the first recess 111r and the second recess 114r. For example, the driving mechanism 115 may be connected to the first clamping arm 111 and the second clamping arm 114 for driving at least one of the first clamping arm 111 and the second clamping arm 114 to rotate and then fix the wheel axis kit 210 (as illustrated in FIG. 3A) of the electric vehicle 200 between the first recess 111r and the second recess 114r. In the present embodiment, the driving mechanism 115 is a cam, but is not limited thereto. As only as a mechanism which can clamp or release the wheel axis kit 210 by driving at least one of the first clamping arm 111 and the second clamping arm 114, the mechanism may be the driving mechanism 115 of this disclosure.

The fixing device 110 of FIG. 2B is in a state of releasing. Under such state, a long axis 1151 of the driving mechanism 115 is substantially parallel to a length direction of the first clamping arm 111 and a length direction of the second clamping arm 114, and the second elastic element 1132 is in a free state. The second elastic element 1132 is connected to an inner side of the first clamping arm 111 and an inner side of the second clamping arm 114. When the first clamping arm 111 and the second clamping arm 114 rotate, the second elastic element 1132 may deform to store potential energy. As a result, when the driving mechanism 115 rotates to make its long axis 1151 be substantially parallel to the orientation of the first clamping arm 111 and the orientation of the second clamping arm 114, the second elastic element 1132 may release the potential energy to drive the first clamping arm 111 and the second clamping arm 114 retune back to the releasing state as illustrated in FIG. 2B.

In the present embodiment, the second elastic element 1132 is located at a side of a first rotating fulcrum 1111 of the first clamping arm 111 and a side of a second rotating fulcrum 1141 of the second clamping arm 114. In another embodiment, the second elastic element 1132 may be located at another side of the first rotating fulcrum 1111 of the first clamping arm 111 and another side of the second rotating fulcrum 1141 of the second clamping arm 114.

In addition, the driving mechanism 115 and the recesses (the first recess 111r and the second recess 114r) may be located at the opposite two sides of the first rotating fulcrum 1111 of the first clamping arm 111 (or the opposite two sides of the second rotating fulcrum 1141 of the second clamping arm 114). In another embodiment, the driving mechanism 115, the first recess 111r and the second recess 114r may be located at the same side of the first rotating fulcrum 1111 of the first clamping arm 111 (or the same side of the second rotating fulcrum 1141 of the second clamping arm 114).

In another embodiment, the first clamping arm 111 may omit the first rotating fulcrum 1111 or the second clamping arm 114 may omit the second rotating fulcrum 1141. As a result, when the driving mechanism 115 operates, the driving mechanism 115 may only drive one of the first recess 111r and the second recess 114r.

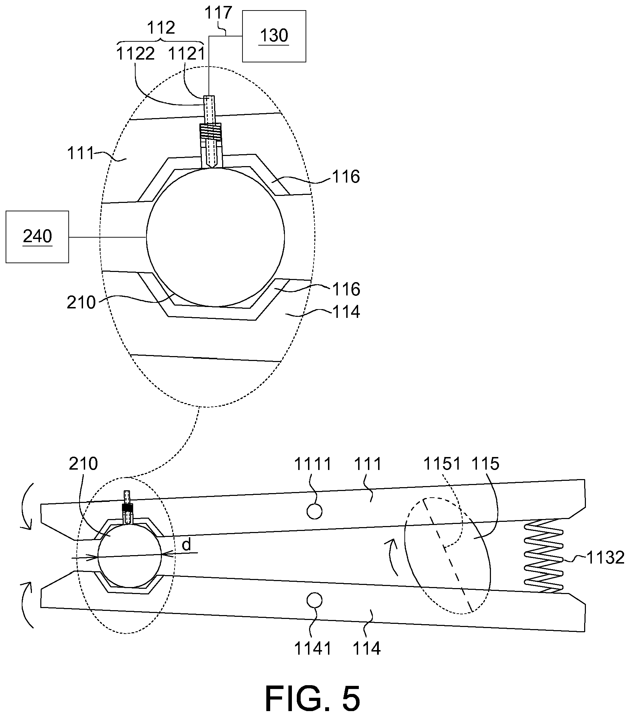

In addition, as illustrated in FIG. 2B, there is an entrance 111a between the first clamping arm 111 and the second clamping arm 114, and the entrance 111a has an inner diameter h less than an outer diameter d (as illustrated in FIG. 5) of the wheel axis kit 210 (as illustrated in FIG. 3A). The cleaning element 118 is disposed on the first clamping arm 111 and adjacent to the entrance 111a. Since the inner diameter h is less than the outer diameter d of the wheel axis kit 210, the wheel axis kit 210 (as illustrated in FIG. 3A) may be cleaned when passing through the entrance 111a. As a result, the resistance of the wheel axis kit 210 (as illustrated in FIG. 3A) and the first conductive portion 112 may be reduced when the wheel axis kit 210 and the first conductive portion 112 contact to each other. In an embodiment, the cleaning element 118 is, for example, a steel brush, sandpaper or other suitable device.

In addition, the insulation element 116 is disposed on a sidewall of the first recess 111r for separating the first clamping arm 111 from the wheel axis kit 210, and accordingly it can prevent the first clamping arm 111 from being electrically short to wheel axis kit 210. For example, the first recess 111r has a bottom surface 111s3, a first lateral surface 111s1 and a second lateral surface 111s2 opposite to the first lateral surface 111s1. The insulation element 116 includes a first insulation portion 1161, a second insulation portion 1162 and a third insulation portion 1163. The first insulation portion 1161 is disposed on the first lateral surface 111s1 of the first recess 111r, the second insulation portion 1162 is disposed on the second lateral surface 111s2 of the first recess 111r, and the third insulation portion 1163 is disposed on the bottom surface 111s3 of the first recess 111r. Similarly, another insulation element 116 may be disposed on a sidewall of the second recess 114r for separating the second clamping arm 114 from the wheel axis kit 210 (as illustrated in FIG. 3A), and accordingly it can prevent the second clamping arm 114 from being electrically short to wheel axis kit 210.

FIG. 3A illustrates a local cross sectional view of the electric vehicle 200 according to an embodiment of the present disclosure, and FIG. 3B illustrates a cross sectional view o of the wheel axis kit 210 of FIG. 3A along a direction 3B-3B'.

As illustrated in FIG. 3A, the electric vehicle 200 includes two wheel axis kits 210, a wheel tire 220, a wheel axis 230 and a vehicle terminal controller 240. The wheel axis 230 is projected from opposite two sides of the wheel tire 220 and does not rotate with respect to the wheel tire 220. Two wheel axis kits 210 may be disposed two portions of the wheel axis 230 which are projected from the wheel tire 220 respectively. The wheel tire 220 is, for example, a front wheel tire, a rear wheel tire or a wheel tire in other position.

As illustrated in FIG. 3B, each wheel axis kit 210 includes a conductive cover 211, a first insulation washer 212, a second insulation washer 213, a second electric transmitting wire 214 (as illustrated in FIG. 3A), a first fixing element 215 and a second fixing element 216. The conductive cover 211 includes a first end surface 211s1 and a second end surface 211s2 opposite to the first end surface 211s1. The first insulation washer 212 is disposed on the first end surface 211s1. The second insulation washer 213 is disposed on the second end surface 211s2.

The conductive cover 211, the first insulation washer 212 and the second insulation washer 213 includes a first through hole 211a, a second through hole 212a and a third through hole 213a which overlap to each other. The wheel axis 230 passes through the first through hole 211a, the second through hole 212a and the third through hole 213a. The first fixing element 215 and the second fixing element 216 are fixed to the wheel axis 230 and fixe the conductive cover 211, the first insulation washer 212 and the second insulation washer 213 between the first fixing element 215 and the second fixing element 216. In an embodiment, the first fixing element 215 and the second fixing element 216 are nuts, for example.

In addition, the first insulation washer 212 is located between the first end surface 211s1 and the first fixing element 215 for electrically isolating the conductive cover 211 from the first fixing element 215. As a result, it can prevent the conductive cover 211 from being electrically short to a component of the electric vehicle 200 through the first fixing element 215, wherein the component is, for example, a shock-absorber. The second insulation washer 213 is located between the second end surface 211s2 and the second fixing element 216 for electrically isolating the conductive cover 211 from the second fixing element 216. As a result, it can prevent the conductive cover 211 from being electrically short to a component of the electric vehicle 200 through the second fixing element 216, wherein the component is, for example, a shock-absorber. In addition, the first through hole 211a of the conductive cover 211 has an inner diameter larger than an outer diameter of the wheel axis 230, such that the conductive cover 211 in the first through hole 211a is isolated from the physical material of the wheel axis 230. As a result, it can prevent the conductive cover 211 is electrically short to the wheel axis 230.

The wheel axis kit 210 is detachably assembled to the wheel axis 230 of the electric vehicle 200 through the fixing element (for example, the first fixing element 215 and the second fixing element 216), and accordingly it has simple assembly property and convenience of removable property. In the present embodiment, the wheel axis kit 210 may be designed as a cylindrical shape or a spherical shape, and such shape is conducive to the locking for any fixing device.

As illustrated in FIG. 3A, the second electric transmitting wire 214 electrically is connected to the conductive cover 211 and the vehicle terminal controller 240 for transmitting signal and/or electrical power between the conductive cover 211 and the vehicle terminal controller 240.

In step S120, the charging terminal controller 130 may sense whether the wheel axis kit 210 of the electric vehicle 200 enters the scope between the first clamping arm 111 and the second clamping arm 114 of the fixing device 110.

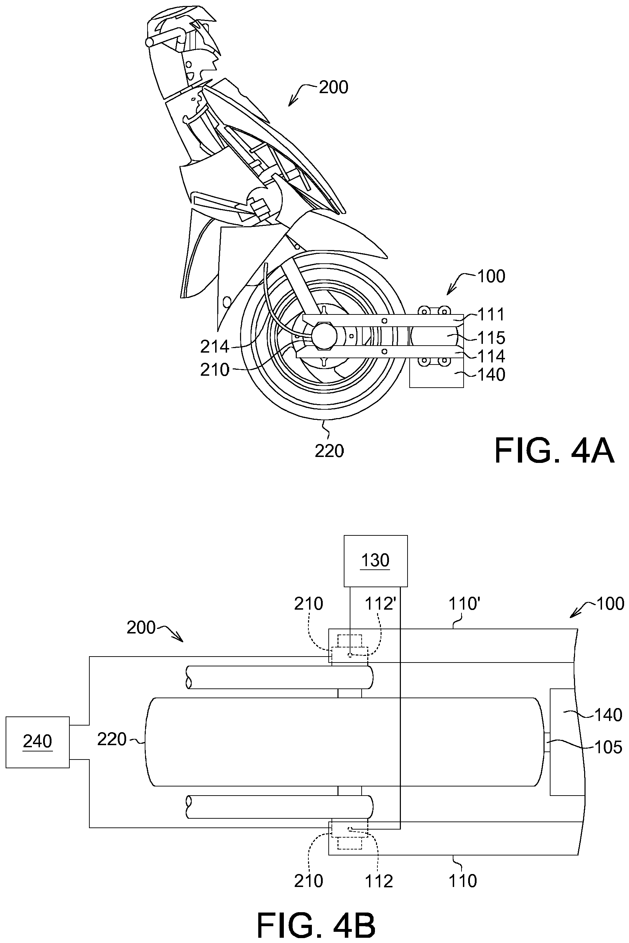

For example, as illustrated in FIGS. 4A and 4B, FIG. 4A illustrates a diagram view of the electric vehicle 200 entering to the scope between the first clamping arm 111 and the second clamping arm 114 of the fixing device 110, and FIG. 4B illustrates a local top view of the fixing device 110 and the electric vehicle 200 of FIG. 4A.

As illustrated in FIGS. 4A and 4B, when user wants to charge the electric vehicle 200, the electric vehicle 200 may be controlled to make the wheel tire 220 enter to the scope between the fixing devices 110 and 110' and approach the tire sensor 105. After the wheel tire 220 triggers the tire sensor 105, it represents that the wheel axis kit 210 is substantially located between the first recess 111r and the second recess 114r. At this time, the charging terminal controller 130 controls the driving mechanism 115 to rotate for clamping the wheel axis kit 210 between the first recess 111r and the second recess 114r. Since the wheel axis kit 210 is clamped between the first recess 111r and the second recess 114r, the wheel axis kit 210 may be steadily clamped and the charging reliability may be increased.

In step S130, as illustrated in FIG. 5, FIG. 5 illustrates a diagram view of the fixing device 110 clamping the wheel axis kit 210. The charging terminal controller 130 controls the driving mechanism 115 to rotate for driving the first clamping arm 111 and the second clamping arm 114 to rotate around the first rotating fulcrum 1111 and the second rotating fulcrum 1141 respectively, such that the first recess 111r and the second recess 114r approach each other to clamp the wheel axis kit 210 between the first recess 111r and the second recess 114r.

As illustrated in FIG. 5, the driving mechanism 115 has a long axis 1151 substantially perpendicular to the first clamping arm 111 and the second clamping arm 114, and accordingly the wheel axis kit 210 may be firmly clamped and it can prevent the wheel axis kit 210 from being easily detached from the first conductive portion 112. As a result, the wheel axis kit 210 may be steadily clamped and the charging reliability may be increased.

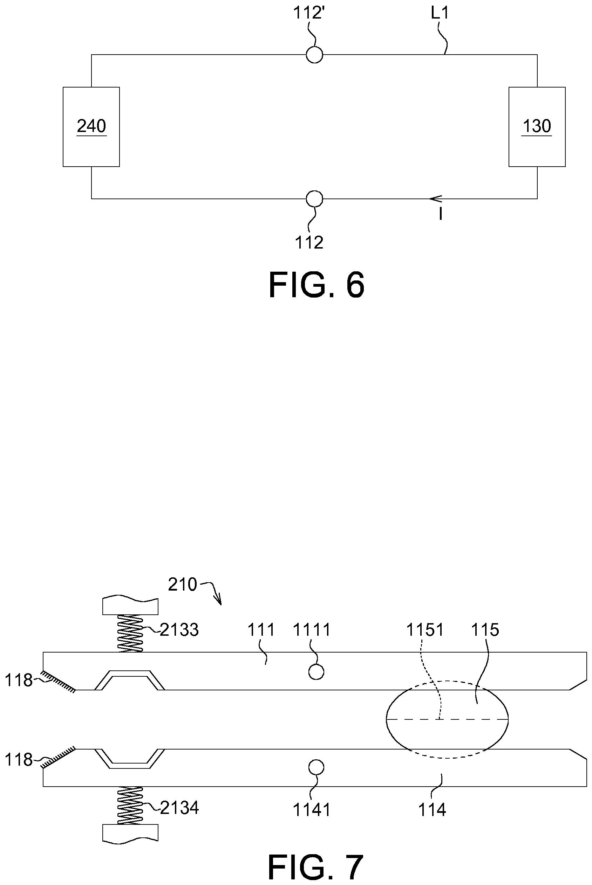

In step S140, the charging terminal controller 130 may detect whether the first conductive portion 112 is electrically connected to the wheel axis kit 210. For example, as illustrated in FIG. 6, it illustrates a loop L1 of the first conductive portion 112 of the fixing device 110, the first conductive portion 112' of the fixing device 110', the charging terminal controller 130 and the vehicle terminal controller 240. The charging terminal controller 130 may output a current signal I to the vehicle terminal controller 240. If the charging terminal controller 130 receives the current signal I, it represents that the first conductive portion 112 reliably contacts to the conductive cover 211, and thus the conductive loop L1 of the vehicle terminal controller 240, the charging terminal controller 130, the first conductive portion 112 and the first conductive portion 112' is formed. As described above, since the charging system 100 includes two conductive portions (for example, the conductive portions 112 and 112'), the conductive loop L1 of the vehicle terminal controller 240 and the charging terminal controller 130 is formed.

In addition, one of the first conductive portion 112 of the fixing device 110 and the first conductive portion 112' of the fixing device 110' may be a positive electrode, and another of the first conductive portion 112 of the fixing device 110 and another of the first conductive portion 112' of the fixing device 110' may be a negative electrode. In addition, the charging terminal controller 130 may provide the electric vehicle 200 with the direct current (DC) or alternating current (AC).

In step S150, if the first conductive portion 112 is electrically connected to the conductive cover 211 of the wheel axis kit 210, the charging terminal controller 130 detects whether a resistance between the conductive portion 112 and the conductive cover 211 is less than a predetermined value. For example, the charging terminal controller 130 may analyze the returned current signal I to calculate the resistance between the conductive portion 112 and the conductive cover 211. In another embodiment, the charging terminal controller 130 may output a detecting signal through the loop L1 and analyze the returned detecting signal to calculate the resistance between the conductive portion 112 and the conductive cover 211. If the resistance between the conductive portion 112 and the wheel axis kit 210 is less than the predetermined value, it represents that the charging may be normally performed, and thus the step S160 is performed. If the resistance between the conductive portion 112 and the conductive cover 2110 is not less than the predetermined value, it represents that the charging is possible to be negatively affected (for example, charging is available, low charging effectiveness) due to the overlarge resistance, and thus the charging will not be performed and the charging system 100 may output a signal representing "unable to charge" to the electric vehicle 200.

In step S160, if the resistance between the conductive portion 112 and the wheel axis kit 210 is less than the predetermined value, the charging terminal controller 130 starts to charge the electric vehicle 200 through the wheel axis kit 210.

As illustrated in FIG. 6, the charging terminal controller 130 may output a carrier wave (not illustrated) which carries the electrical power and the signal. As a result, the electrical power and the signal may be transmitted through the same transmitting wire, such that the charging and information exchanging may be simultaneously performed. Furthermore, since the charging terminal controller 130 may output the carrier wave, the vehicle terminal controller 240, the charging terminal controller 130, the first conductive portion 112 and the first conductive portion 112' may be connected through single transmitting wire. In another embodiment, the signal may be transmitted between the charging terminal controller 130 and the vehicle terminal controller 240 through the wireless transmitting technique.

As described above, when the electric vehicle 200 enters the scope of the fixing device 110, the charging system 100 may control the fixing device 110 to automatically clamp, charge and release the electric vehicle 200 according to the instruction. For example, after the charging system 100 receives the renting instruction, the charging system 100 may automatically release the electric vehicle 200, but is not limited thereto.

FIG. 7 illustrates a local diagram view of the fixing device 210 according to another embodiment of the present disclosure. The fixing device 210 of the present embodiment includes the first clamping arm 111, a third elastic element 2133, a fourth elastic element 2134, the second clamping arm 114, the driving mechanism 115, the insulation element 116, the first electric transmitting wire 117 and the cleaning element 118.

The fixing device 210 is different from the fixing device 110 in that the fixing device 210 may omit the second elastic element 1132 and add the third elastic element 2133 and the fourth elastic element 2134, wherein the third elastic element 2133 and the fourth elastic element 2134 are connected to an outer side of the first clamping arm 111 and an outer side of the second clamping arm 114 respectively.

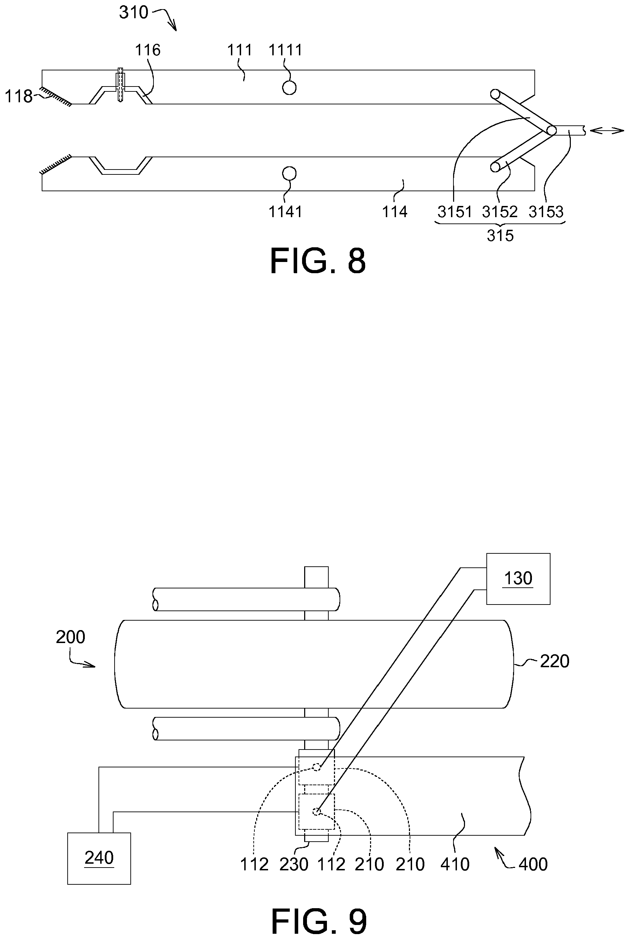

FIG. 8 illustrates a local diagram view of the fixing device 310 according to another embodiment of the present disclosure. The fixing device 310 of the present embodiment includes the first clamping arm 111, the second clamping arm 114, a driving mechanism 315, the insulation element 116, the first electric transmitting wire 117 (not illustrated) and the cleaning element 118.

The fixing device 310 and the fixing device 110 of FIG. 2B are different in that the driving mechanism 315 of the fixing device 310 is a linkage mechanism. For example, the driving mechanism 315 includes a first linkage 3151, a second linkage 3152 and a third linkage 3153. The first linkage 3151 and the second linkage 3153 are pivotally connected to the first clamping arm 111 and the second clamping arm 114 respectively. The third linkage 3153 is pivotally connected to a joint or other portion of the first linkage 3151 and the second linkage 3152 for driving the driving mechanism 315 to rotate. When the driving mechanism 315 operates, the first clamping arm 111 and the second clamping arm 114 are driven to rotate and then to clamp or release the wheel axis kit 210 (not illustrated in FIG. 8).

In above embodiment, one first conductive portion 112 of one fixing device 110 is electrically connected to one wheel axis kit 210, but is not limited thereto. The following description is made.

FIG. 9 illustrates a top view of a charging system 400 connecting to the electric vehicle 200 according to another embodiment of the present disclosure. The charging system 400 includes the tire sensor 105 (not illustrated), a fixing device 410, the charging terminal controller 130 and the block body 140 (not illustrated). The fixing device 410 and the fixing device 110 are different in that the fixing device 410 includes two first conductive portions 112, and the two wheel axis kits 210 of the electric vehicle 200 both are disposed on the same side of the wheel axis 230. Under such design, two first conductive portions 112 of one fixing device 410 are electrically connected to two wheel axis kits 210 respectively. When two wheel axis kits 210 are connected to two first conductive portions 112 respectively, two wheel axis kits 210 and two first conductive portions 112 may form a loop similar to the loop L1 of FIG. 6.

Since the number of the wheel axis kits 210 of the present embodiment is plural, the non-carrier wave technique may be used. For example, one of the wheel axis kits 210 may transmit power, and another of the wheel axis kits 210 may transmit signal.

The fixing method and the charging method of the charging system 400 and the electric vehicle 200 are similar to that of the charging system 100 and the electric vehicle 200, and similarities are not repeated here.

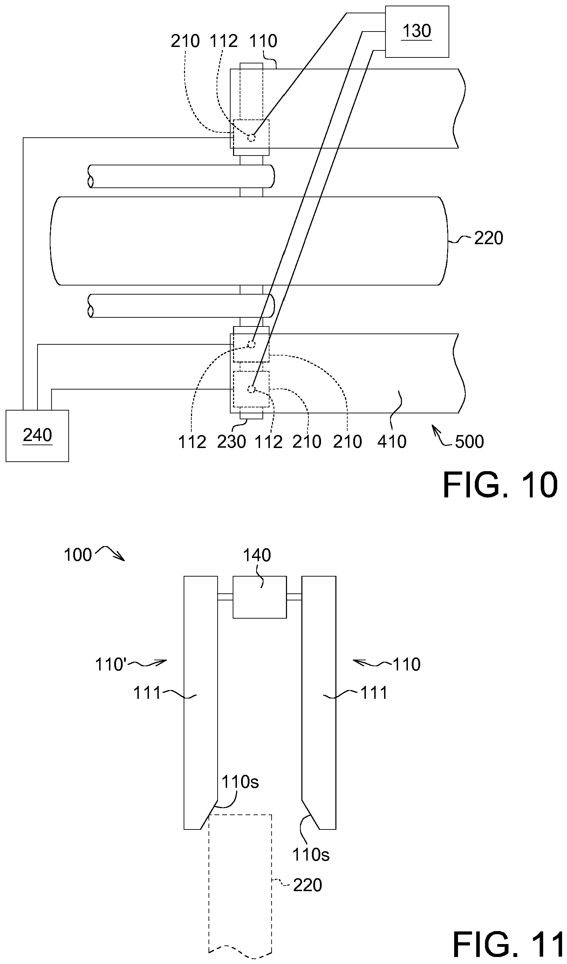

FIG. 10 illustrates a top view of a charging system 500 connecting to the electric vehicle 200 according to another embodiment of the present disclosure. The charging system 500 includes the tire sensor 105 (not illustrated), the fixing device 410, the fixing device 110, the charging terminal controller 130 and the block body 140 (not illustrated). The charging system 500 and the charging system 400 are different in that the charging system 500 further includes the fixing device 110 and the electric vehicle 200 includes three wheel axis kits 210, wherein two wheel axis kits 210 are assembled to one side of the wheel axis 230, and another wheel axis kit 210 is assembled to another side of the wheel axis 230. Under such design, when three wheel axis kits 210 are electrically connected to three first conductive portions 112 respectively, two of the wheel axis kits 210 and corresponding two first conductive portions 112 may form a loop similar to the loop L1 of FIG. 6, and another of the wheel axis kits 210 and corresponding another first conductive portions 112 may transmit signal.

In addition, the fixing method and the charging method of the charging system 500 and the electric vehicle 200 are similar to that of the charging system 100 and the electric vehicle 200, and similarities are not repeated here.

As described above, the number of the fixing devices and the clamping method of the fixing device are not limited to the description above.

FIG. 11 illustrates a top view of the charging system 100 according to another embodiment of the present disclosure. The charging system 100 of the present embodiment includes the tire sensor 105 (not illustrated), the fixing device 110, the fixing device 110', the charging terminal controller 130 (not illustrated) and the block body 140, wherein the charging terminal controller 130 may be integrated into the block body 140 or disposed outside the block body 140.

The fixing device 110 includes the first clamping arm 111, the first conductive portion 112 (not illustrated), the first elastic element 1131 (not illustrated), the second elastic element 1132 (not illustrated), the second clamping arm 114 (not illustrated), the driving mechanism 115 (not illustrated), the insulation element 116 (not illustrated), the first electric transmitting wire 117 (not illustrated) and the cleaning element 118 (not illustrated).

A front end of the first clamping arm 111 and a front end of the second clamping arm 114 (not illustrate in FIG. 11) of the fixing device 110 has a slantwise lateral surface 110s facing the wheel tire 220. In addition, the first clamping arm 111 of the fixing device 100' also has the slantwise lateral surface 110s. The slantwise lateral surface 110s may guide the wheel tire 220 enter the scope between the fixing devices 100 and 100'. As a result, even if the wheel tire 220 deflects, the wheel tire 220 still can enter the scope between the fixing devices 100 and 100' to be automatically clamped and charged after touching the slantwise lateral surface 110s.

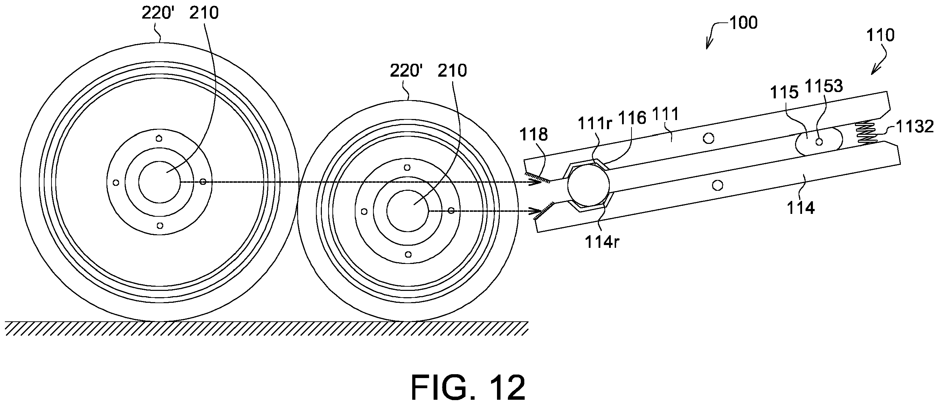

FIG. 12 illustrates a side view of the charging system 100 according to another embodiment of the present disclosure. The charging system 100 includes the tire sensor 105 (not illustrated), the fixing device 110, the fixing device 110' (not illustrated), the charging terminal controller 130 (not illustrated) and the block body 140 (not illustrated).

The fixing device 110 includes the first clamping arm 111, the first conductive portion 112 (not illustrated), the first elastic element 1131 (not illustrated), the second elastic element 1132, the second clamping arm 114, the driving mechanism 115, the insulation element 116, the first electric transmitting wire 117 (not illustrated) and the cleaning element 118.

In the present embodiment, the first clamping arm 111 and the second clamping arm 114 may be slantwise disposed and swing up and down around the driving mechanism 115 serving as a fulcrum for fitting the wheel axis kits 210 having different heights by the first clamping arm 111 and the second clamping arm 114. As a result, the fixing device 110 of the present embodiment may be used in full-size wheel tire 220'. That is, because of the first clamping arm 111 and the second clamping arm 114 being slantwise disposed, the first clamping arm 111 and the second clamping arm 114 still can fit various wheel axis kit 210 having different height to let the wheel tire 220 enter the scope between the fixing device 110 and 110' for being automatically clamped and charged, even if the position of the wheel axis kit 210 is lower (for example, the wheel tire 220' on right side of the figure is smaller, and thus the position of the wheel axis kit 210 disposed thereon is lower), or the position of the wheel axis kit 210 is higher (for example, the wheel tire 220' on left side of the figure is larger, and thus the position of the wheel axis kit 210 disposed thereon is higher).

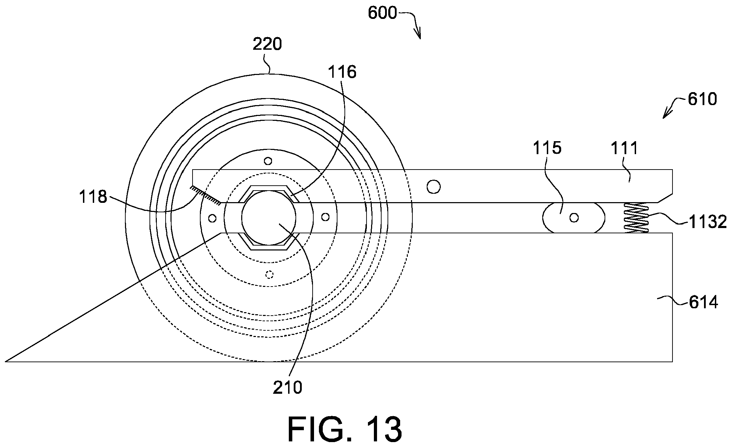

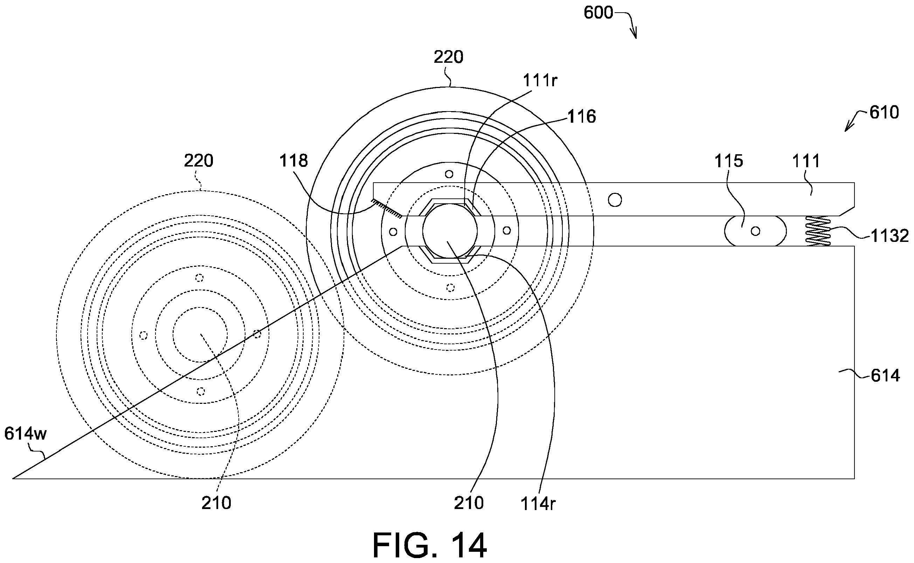

FIGS. 13 and 14 illustrate side views of a charging system 600 according to another embodiment of the present disclosure. The charging system 600 includes the tire sensor 105 (not illustrated), two fixing devices 610 (only one is illustrated in FIGS. 13 and 14), the charging terminal controller 130 (not illustrated) and the block body 140 (not illustrated).

The fixing device 610 includes the first clamping arm 111, the first conductive portion 112 (not illustrated), the first elastic element 1131 (not illustrated), the second elastic element 1132, a fixing base 614, the driving mechanism 115, the insulation element 116, the first electric transmitting wire 117 (not illustrated) and the cleaning element 118.

In the present embodiment, the fixing base 614 is a fixed structure which is not movable with respect to the driving mechanism 115. The fixing base 614 has two second recesses 114r as described above, and the wheel tire 220 can be steadily fixed to between the first recess 111r of the first clamping arm 111 and the second recess 114r of the fixing base 614 for being automatically clamped and charged.

In addition, as illustrated in FIG. 14, the fixing base 614 has a slope 614w, and the wheel axis kit 210 disposed on the wheel tire 220 may enter the scope between the first clamping arm 111 and the fixing base 614 along the slope 614w. Furthermore, even if the position of the wheel axis kit 210 is lower than the position of the first recess 111r and the position of the second recess 114r, the wheel axis kit 210 can enter the scope between the first recess 111r and the second recess 114r along the slope 614w.

The fixing method and the charging method of the charging system 600 and the electric vehicle 200 are similar to that of the charging system 100 and the electric vehicle 200, and similarities are not repeated here.

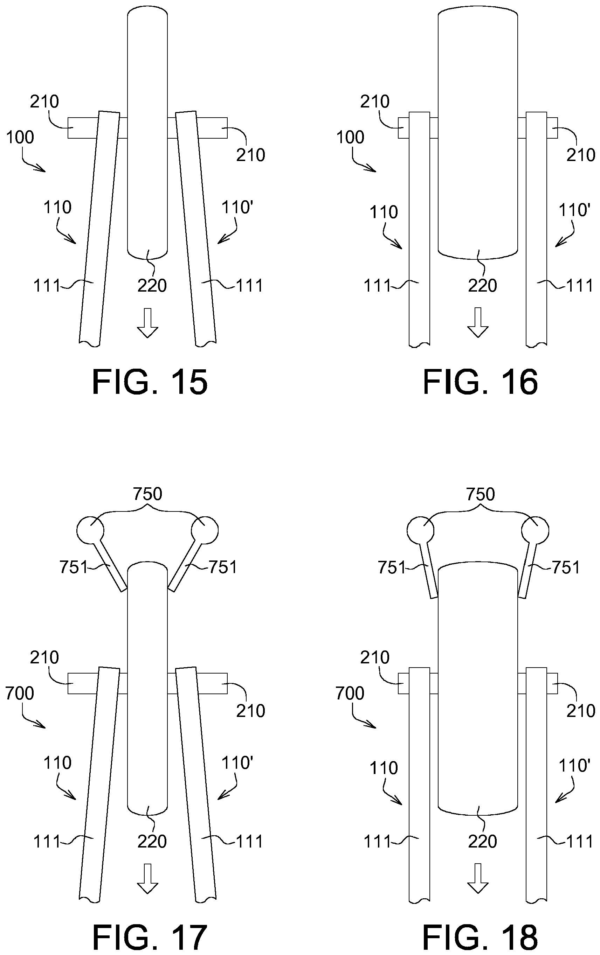

FIGS. 15 and 16 illustrate top views of the charging system 100 according to another embodiment of the present disclosure. The charging system 100 of the present disclosure includes the tire sensor 105 (not illustrated), the fixing device 110, the fixing device 110', the charging terminal controller 130 (not illustrated) and the block body 140 (not illustrated).

The fixing device 110 includes the first clamping arm 111, the first conductive portion 112 (not illustrated), the first elastic element 1131 (not illustrated), the second elastic element 1132 (not illustrated), the second clamping arm 114 (not illustrated), the driving mechanism 115 (not illustrated), the insulation element 116 (not illustrated), the first electric transmitting wire 117 (not illustrated) and the cleaning element 118 (not illustrated). The structure of the fixing device 110' is similar to that of the fixing device 110, and similarities are not repeated here.

The fixing devices 110 and 110' may swing left and right for fixing the wheel axis kit 210 of the electric vehicle 200 between the first recess 111r (not illustrated) and the second recess 114r (not illustrated). In detail, the fixing devices 110 and 110' may swing left and right according to the width of the wheel tire 220 to let two wheel axis kits 210 disposed on two sides of the wheel tire 220 to be fixed by the fixing devices 110 and 110'. As a result, even if two wheel axis kits 210 are disposed on the wheel tire 220 having different diameter, and the wheel axis kits 21 still can be clamped by the fixing devices 110 and 110'.

FIGS. 17 and 18 illustrate top views of a charging system 700 according to another embodiment of the present disclosure. The charging system 700 of the present disclosure includes the tire sensor 105 (not illustrated), the fixing device 110, the fixing device 110', the charging terminal controller 130 (not illustrated), the block body 140 (not illustrated) and a tire width sensor 750.

The tire width sensor 750 may detect the width of the wheel tire 220. Before the wheel tire 220 enter the scope between the fixing devices 110 and 110', the wheel tire 220 first touches the tire width sensor 750, and then the tire width sensor 750 senses the width of the wheel tire 220. The fixing devices 110 and 110' swings left and right according to the width of the wheel tire 220 for fixing two wheel axis kits 210 disposed on two sides of the wheel tire 220 to the scope between the fixing devices 110 and 110'.

Furthermore, the tire width sensor 750 may include two rotatable blocks 751 and an angle sensor (not illustrated). The tire width sensor 750 may obtain the width of the wheel tire 220 by sensing the rotating angle of two blocks 751 in left and right side when the wheel tire 220 stretches two tire width sensors 750. In another embodiment, the charging terminal controller 130 may automatically receive the suitable opening width of two fixing devices 110 and 110' from the tire width sensor 750 by using wireless communication when the electric vehicle 200 is parked, and then the charging terminal controller 130 controls two fixing devices 110 and 110' to adjust the opening angle.

In addition, the fixing method and the charging method of the charging system 700 and the electric vehicle 200 are similar to that of the charging system 100 and the electric vehicle 200, and similarities are not repeated here.

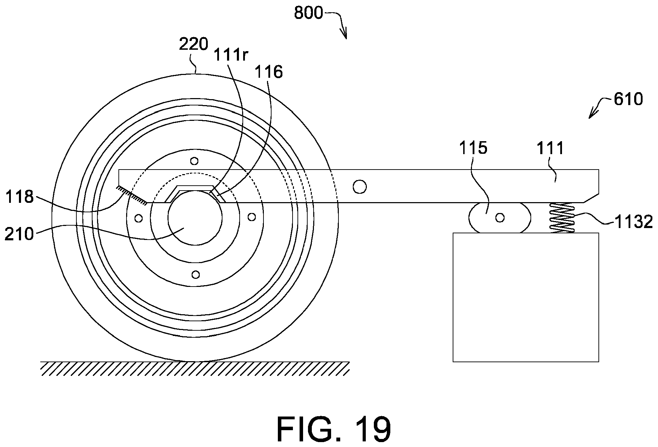

FIG. 19 illustrates a side view of a charging system 800 according to another embodiment of the present disclosure. The charging system 800 of the present disclosure includes the tire sensor 105 (not illustrated), two fixing devices 610 (only one is illustrated), the charging terminal controller 130 (not illustrated) and the block body 140 (not illustrated).

The charging system 800 is different from the aforementioned embodiments in that the charging system 800 may omit the second recess. Under such design, when the user wants to charge the electric vehicle 200, the tire sensor 105 may sense whether the wheel axis kits 210 of the electric vehicle 200 enters the scope of the first recess 111r of the first clamping arm 111 of the fixing device 610. If the wheel axis kits 210 enters the scope of the first recess 111r of the first clamping arm 111 of the fixing device 610, the charging terminal controller 130 controls the driving mechanism 115 to drive the first clamping arm 111 for fixing the wheel axis kits 210 within the first recess 111r.

The fixing method and the charging method of the charging system 800 and the electric vehicle 200 are similar to that of the charging system 100 and the electric vehicle 200, and similarities are not repeated here.

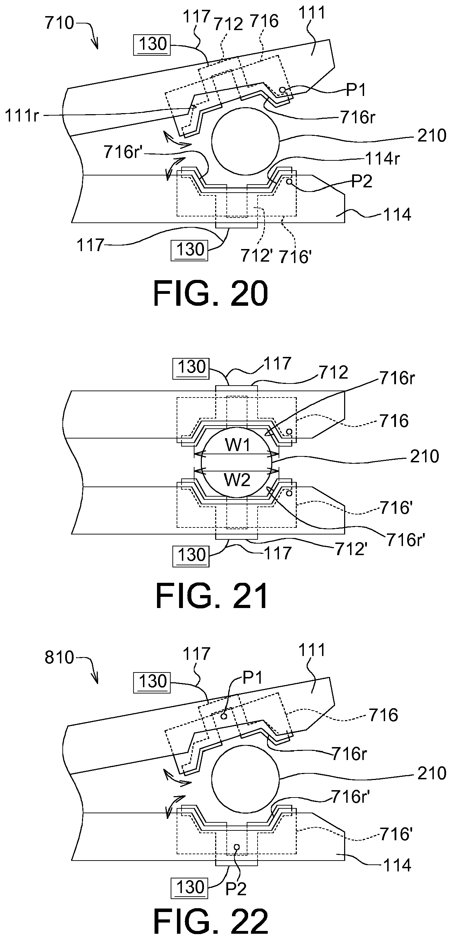

FIGS. 20-21 illustrate a side view of a fixing device 710 according to another embodiment of the present disclosure. The fixing device 710 includes a first clamping arm 111, a first conductive portion 712, a first conductive portion 712', the second elastic element 1132 (not illustrated), a second clamping arm 114 (not illustrated), the driving mechanism 115 (not illustrated), an insulation element 716, an insulation element 716', two first electric transmitting wires 117 and the cleaning element 118 (not illustrated).

The insulation element 716 is pivotally connected to a main body of the first clamping arm 111 for being movable with respect to the main body of the first clamping arm 111. The insulation element 716 may separate the main body of the first clamping arm 111 from the first conductive portion 712 for avoiding the electrically short of the first clamping arm 111 and the first conductive portion 712. In the present embodiment, a pivotal point P1 of the insulation element 716 and the main body of the first clamping arm 111 is located at an end of the insulation element 716. The first conductive portion 712 is disposed on the insulation element 716 for moving together with the insulation element 716. The insulation element 716 has a first recess 716r, wherein the first conductive portion 712 and the main body of the first clamping arm 111 may have the shapes corresponding to the shape (concave portion) of the first recess 716r, but is not limited thereto.

In addition, although not illustrated, the insulation element 716 and the main body of the first clamping arm 111 each having a position-limiting portion, wherein the position-limiting portions may restrict the rotating angle of the insulation element 716, and accordingly it can prevent the insulation element 716 from impacting the underneath insulation element 716'.

The insulation element 716' is pivotally connected to a main body of the second clamping arm 114 for being movable with respect to the main body of the second clamping arm 114. The insulation element 716' may separate the main body of the second clamping arm 114 from the first conductive portion 712' for avoiding the electrically short of the second clamping arm 114 and the first conductive portion 712'. In the present embodiment, a pivotal point P2 of the insulation element 716' and the main body of the second clamping arm 114 is located at an end of the insulation element 716'. The first conductive portion 712' is disposed on the insulation element 716' for moving together with the insulation element 716'. The insulation element 716' has a second recess 716r', wherein the first conductive portion 712' and the main body of the second clamping arm 114 may have the shapes corresponding to the shape (concave portion) of the second recess 716r', but is not limited thereto.

As a result, as illustrated in FIG. 21, when the first clamping arm 111 and the second clamping arm 114 clamp the wheel axis kit 210, the wheel axis kit 210 is located between the first recess 716r and the second recess 716r'. Through the movable property of the first recess 716r and the second recess 716r', no matter where the wheel axis kit 210 located at the first recess 716r and the second recess 716r' is, two first conductive portions 712 and 712' can contact with the wheel axis kit 210 for increasing the contact area of the wheel axis kit 210 to the first conductive portions 712 and 712', and also can reduces the impact on the wheel axis kit 210 when the electric vehicle 200 is parked.

In addition, due to the first recess 716r and the second recess 716r' being movable, even if the width W1 of the first recess 716r and the width W2 of the first recess 716r' are designed as being more wide, no matter where the wheel axis kit 210 located at the first recess 716r and the second recess 716r' is, two first conductive portions 712 and 712' can contact with the wheel axis kit 210. In other words, fixing device 710 may allow a larger position error and corrects the position error automatically when clamping the wheel axis kit 210 of the electric vehicle 200.

In another embodiment, the second recess 716r' is fixed to the main body of the second clamping arm 114, that is, the second recess 716r' and the main body of the second clamping arm 114 can't move relatively. Under such design, two first conductive portions 712 and 712' can contact with the wheel axis kit 210 through the relative motion between the insulation element 716 and the main body of the first clamping arm 111. In addition, such embodiment also can be applied to the fixing base 614 of FIGS. 13 and 14.

In addition, due to the insulation element 716 having the first recess 716r, the insulation element 716 provides a large contact area, and accordingly the insulation element 716 can contact with several points, lines or surfaces of the wheel axis kit 210 for ensuring the electrical contact quality between the first conductive portions 712 and the wheel axis kit 210, and the contacting stress between the first conductive portions 712 and the wheel axis kit 210 can be reduced for lengthening the life of the first conductive portions 712 and/or the wheel axis kit 210. In an embodiment, the first conductive portion 712 has a U-shaped structure or other shape. The first conductive portion 712' has the structure similar to that of the first conductive portion 712, and similarities are not repeated here.

FIG. 22 illustrates a side view of a fixing device 810 according to another embodiment of the present disclosure. The fixing device 810 of the present embodiment has the features similar to that of fixing device 710. The difference is in that the pivotal point P1 of the insulation element 716 and the main body of the first clamping arm 111 is located at a central portion of the insulation element 716, and the pivotal point P2 of the insulation element 716' and the main body of the second clamping arm 114 is located at a central portion of the insulation element 716'. However, as long as two insulation elements 716 and 716' has movable property, the position of the pivotal point is limited to the present embodiment.

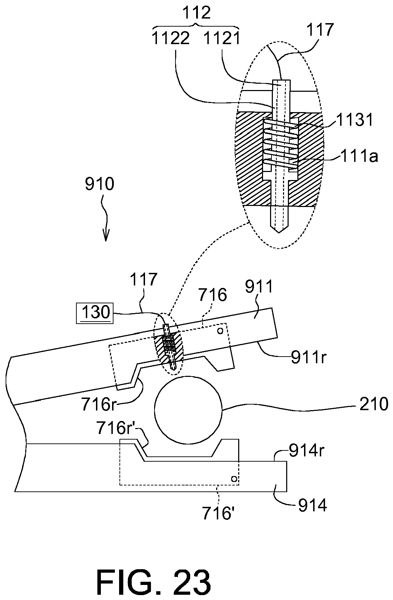

FIG. 23 illustrates a side view of a fixing device 910 according to another embodiment of the present disclosure. The fixing device 910 includes a first clamping arm 911, the first conductive portion 112, the first elastic element 1131, the second elastic element 1132 (not illustrated), a second clamping arm 914, the driving mechanism 115 (not illustrated), the insulation element 716, the insulation element 716', the first electric transmitting wire 117 and the cleaning element 118 (not illustrated).

Deploys of the first conductive portion 112 and the first elastic element 113 of the present embodiment are similar to that of the first conductive portion 112 and the first elastic element 113 of FIG. 2B, and similarities are not repeated here. The insulation element 716 has the first recess 716r similar to the first recess 716r of FIG. 20, the insulation element 716' has the second recess 716r' similar to the second recess 716r' of FIG. 20, and similarities are not repeated here.

The fixing device 910 of the present embodiment has the features similar to that of fixing device 710. The difference is in that the first conductive portion 712 of the fixing device 910 is replaced by the first conductive portion 112, and the first conductive portion 712' is omitted. In addition, the shape of the first recess 911r of the first clamping arm 911 is different from the shape of the first recess 111r of FIG. 2B, and the shape of the second recess 914r of the second clamping arm 914 is different from the shape of the second recess 114r of FIG. 2B.

In another embodiment, the first clamping arm 911 and the second recess 914r may omit the first recess 911r and the second recess 914r; under such design, the first recess 716r of the insulation element 716 and the second recess 716r' of the insulation element 716' clamp the wheel axis kit 210. Thus, the shapes of the main bodies of the first clamping arm 911 and the second clamping arm 914 are limited thereto.

In another embodiment, the first clamping arm 111 of FIG. 20 may be replaced by the first clamping arm 911, and/or the second clamping arm 114 of FIG. 20 may be replaced by the second clamping arm 914.

As described above, the charging system of the disclosure includes at least one fixing device. For example, one fixing device may fix at least one wheel axis kit disposed on one side of the wheel axis. Or, two fixing devices may fix several wheel axis kit disposed on two side of the wheel axis. The fixing device may automatically clamp/fix the wheel axis kit of the electric vehicle, automatically charge the electric vehicle through wheel axis kit and determine whether the electric vehicle is in full charge. If the electric vehicle is in full charge, the fixing device may automatically release the wheel axis kit of the electric vehicle or release the wheel axis kit of the electric vehicle according to an Instruction. However, even if the electric vehicle is not in full charge, the charging system can still release the wheel axis kit according to an Instruction. In an embodiment, one fixing device may include one or several conductive portions, and each conductive portion may electrically contact one corresponding one wheel axis kit. In an embodiment, a loop of the charging terminal controller of the charging system and the vehicle terminal controller of the electric vehicle is formed through two conductive portions for transmitting electrical power and/or signal. Several conductive portions may be disposed on one clamping arm of the fixing device or discretely disposed on several clamping arms. In an embodiment, one wheel axis kit or several wheel axis kits may be disposed on one side of the wheel axis of the electric vehicle. In another embodiment, several wheel kits may be discretely disposed on two side of the wheel axis of the electric vehicle. In addition, the fixing device may include one clamping arm or two clamping arms for fixing the wheel axis kit of the electric vehicle. The wheel axis kit of the electric vehicle may be fixed or clamped to a recess of one clamping arm, between two recesses of two clamping arms (one recess may be selectively omitted) or between a recess of one clamping arm and a recess of the fixing base (may be selectively omitted).

It will be apparent to those skilled in the art that various modifications and variations can be made to the disclosed embodiments. It is intended that the specification and examples be considered as exemplary only, with a true scope of the disclosure being indicated by the following claims.

## Claims

1. A fixing device (100,100',110,110',410,610), for fixing a wheel axis kit (230), disposed on an electric vehicle (200), for charging, comprises:
a first clamping arm (111,911) having a first recess (111r, 716r, 911r) and a first rotating fulcrum (1111);
a conductive portion (112,112',712,712') disposed within the first recess (111r, 716r, 911r), wherein the conductive portion (112,112',712,712') is configured to be electrically connectable to the wheel axis kit (210); **characterized by**
a driving mechanism (115, 315) connected to the first clamping arm (111,911) for driving the first clamping arm (111,911); wherein the first rotating fulcrum (1111) is located between the driving mechanism (115, 315) and the first recess (111r, 716r, 911r), such that the first clamping arm (111,911) driven by the driving mechanism (115, 315) is allowed to rotate about the first rotating fulcrum (1111) for fixing the wheel axis kit (210) of an electric vehicle (200) within the first recess (111r, 716r, 911r).

2. The fixing device (100,100',110,110',410,610) according to claim 1, being **characterized in that** the fixing device (100,100',110,110',410,610) further comprises:
a second clamping arm (114, 914) having a second recess (114r, 716r', 914r), and a second rotating fulcrum (1141);
wherein the second rotating fulcrum (1141) is located between the driving mechanism (115, 315) and the second recess (114r, 716r', 914r), such that the first clamping arm (111,911) and the second clamping arm (114, 914) driven by the driving mechanism (115, 315) are allowed to rotate about the first rotating fulcrum (1111) and the second rotating fulcrum (1141) respectively and then fix the wheel axis kit (210) between the first recess (111r, 716r, 911r) and the second recess (114r, 716r', 914r).

3. The fixing device (100,100',110,110',410,610) according to claim 1, being **characterized in that** the fixing device (100,100',110,110',410,610) further comprises:
a fixing base (614) having a second recess (114r, 716r', 914r), wherein the fixing base (614) is stationary with respect to the first clamping arm (111,911),
wherein the driving mechanism (115, 315) is configured to drive the first clamping arm (111,911) to clamp a wheel axis kit (210) of an electric vehicle (200) between the first recess (111r, 716r, 911r) and the second recess (114r, 716r', 914r).

4. The fixing device (100,100',110,110',410,610) according to claims 1 to 3, being **characterized in that** the first clamping arm (111,911) has a sliding hole (111a), and the conductive portion (112,112',712,712') is movably disposed within the sliding hole (111a).

5. The fixing device (100,100',110,110',410,610) according to claim 4, being **characterized in that** the fixing device (100,100',110,110',410,610) further comprises:
a first elastic element (113,1131) disposed within the sliding hole (111a) and connected to the conductive portion and a bottom surface of the sliding hole (111a).

6. The fixing device (100,100',110,110',410,610) according to claims 1 to 5, being **characterized in that** the fixing device (100, 100', 110, 110', 410, 610) further comprises:
an insulation element (116,716,716') disposed on a wall of the first recess (111r, 716r, 911r) for insulating the first clamping arm (111,911) from a wheel axis kit (210) of an electric vehicle (200).

7. The fixing device (100,100',110,110',410,610) according to claims 1 to 6, being **characterized in that** the fixing device (100,100',110,110',410,610) further comprises:
an electrical wire connected to the conductive portion (112,112',712,712') and a charging terminal controller (130).

8. The fixing device (100,100',110,110',410,610) according to claims 1 to 7, being **characterized in that** the driving mechanism (115, 315) is a cam.

9. The fixing device (100,100',110,110',410,610) according to claim 2, being **characterized in that** the driving mechanism (115, 315) is a linkage mechanism.

10. The fixing device (100,100',110,110',410,610) according to claim 1, being **characterized in that** the fixing device (100, 100',110,110',410,610) further comprises:
a second clamping arm (114,914); and
a second elastic element (1132) connected to an inner side of the first clamping arm (111,911) and an inner side of the second clamping arm (114,914).

11. The fixing device (100,100',110,110',410,610) according to claim 1, being **characterized in that** the fixing device (100,100',110,110',410,610) further comprises:
a second clamping arm (114,914);
an elastic element (2133) connected to an outer side of the first clamping arm (111,911); and
another elastic element (2134) connected to an outer side of the second clamping arm (114,914).

12. The fixing device (100,100',110,110',410,610) according to claims 1 to 11, being **characterized in that** a front end of the first clamping arm (111,911) has a slantwise lateral surface (110s) facing an electric vehicle (200).

13. The fixing device (100,100',110,110',410,610) according to claims 1 to 12, being **characterized in that** the first clamping arm (111,911) comprises a movable insulation element (716, 716') on which the first recess (111r, 716r, 911r) is disposed, and the conductive portion (112,112',712,712') is disposed on the insulation element (716, 716').

14. The fixing device (100,100',110,110',410,610) according to claim 13, being **characterized in that** the insulation element has a sliding hole (111a) within which the conductive portion (112,112',712,712') is disposed.

15. A charging system (100,400,500,600,700,800), comprises:
the fixing device (100, 100', 110, 110', 410, 610) according to one of claims 1 to 14;
a tire sensor (105) configured to sense whether the wheel axis kit (210) of the electric vehicle (200) enters a scope of the first recess (111r, 716r, 911r) of the first clamping arm (111,911) of the fixing device (100,100',110,110',410,610); and
a charging terminal controller (130) electrically connected to the conductive portion (112,112',712,712'), wherein if the wheel axis kit (210) enters the scope of the first recess (111r, 716r, 911r) of the first clamping arm (111,911) of the fixing device, the charging terminal controller (130) controls the driving mechanism (115, 315) to fix the wheel axis kit (210) within the first recess (111r, 716r, 911r).

16. The charging system (100,400,500,600,700,800) according to claim 15, being **characterized in that** the tire sensor (105) is a mechanical switch, an optical sensor or an ultrasonic sensor.

17. The charging system (100,400,500,600,700,800) according to claims 15 or 16, being **characterized in that** the charging system (100,400,500,600,700,800) further comprises:
a block body (140) having a front surface;
wherein the front surface faces the electric vehicle (200) if the wheel axis kit (210) of the electric vehicle (200) is fixed to the first clamping arm.

18. The charging system (100,400,500,600,700,800) according to claims 15 to 17, comprises:
two the fixing devices according to claims 1 to 14;
wherein the two fixing devices are disposed, such that each fixing device is configured to fix one wheel axis kit, wherein each wheel axis kit is disposed at one end of the vehicle axis.

19. A wheel axis kit (210) connectable to a fixing device according to claim 1, comprises:
a conductive cover (211) for being disposed on a wheel axis and having a first end surface (211s1) and a second end surface (211s2) opposite to the first end surface (211s1);
the conductive cover (211) has a first through hole configured such that the wheel axis can pass through, whereby the inner diameter of the first through hole is larger than the outer diameter of the wheel axis such that the conductive cover in the first through hole is isolated from the physical material of the wheel axis;
a first insulation washer (212) disposed on the first end surface (211s1) of the conductive cover (211) for electrically isolating the conductive cover (211) from the wheel axis;
a second insulation washer (213) disposed on the second end surface (211s2) of the conductive cover (211) for electrically isolating the conductive cover (211) from the wheel axis; and
an electric transmitting wire electrically connected to the conductive cover (211);
the first and second insulation washers are configured to keep the conductive cover at a distance, by centering it, with respect to the vehicle axis.

20. The wheel axis kit (210) according to claim 19, being **characterized in that** the conductive cover is shaped into cylinder shape or ball shape.

21. The wheel axis kit (210) according to claims 19 to 20, being **characterized in that** the wheel axis kit (210) further comprises:
a first fixing element; and
a second fixing element;
wherein the first insulation washer is configured to insulate the conductive cover from the first fixing element, and the second insulation washer is configured to insulate the conductive cover from the second fixing element.

22. A fixing method, being **characterized in that**:
providing the charging system according to claims 15 to 18;
sensing whether the wheel axis kit (210) of the electric vehicle (200) according to claim 19 enters the scope of the first recess (111r, 716r, 911r) of the first clamping arm (111,911) of the fixing device (100, 100',110,110',410,610) by the tire sensor (105); and
controlling the driving mechanism (115, 315) to fix the wheel axis kit (210) within the first recess (111r, 716r, 911r) by the charging terminal controller if the wheel axis kit (210) enters the scope of the first recess (111r, 716r, 911r) of the first clamping arm (111,911) of the fixing device.

23. The fixing method according to claim 22, being **characterized in that** the fixing method further comprises:
detecting whether the conductive portion (112,112',712,712') is electrically connected to the wheel axis kit (210) by the charging system.

24. The fixing method according to claims 22 or 23, being **characterized in that** the fixing method further comprises:
detecting whether a resistance between the conductive portion (112,112',712,712') and the wheel axis kit (210) is less than a predetermined value by the charging system if the conductive portion (112,112',712,712') is electrically connected to the wheel axis kit (210); and
charging the electric vehicle (200) by the charging system through the wheel axis kit (210) if the resistance is less than the predetermined value.

## Patentansprüche

1. Fixiervorrichtung (100, 100', 110, 110', 410, 610) zum Fixieren eines an einem Elektrofahrzeug (200) angeordneten Radachsenkits (210), zum Laden, mit:
einem ersten Klemmarm (111, 911) mit einer ersten Ausnehmung (111r, 716r, 911r) und einem ersten Drehpunkt (1111);
einem leitfähigen Bereich (112, 112', 712, 712'), der in der ersten Ausnehmung (111r, 716r, 911r) angeordnet ist, wobei der leitfähige Bereich (112, 112', 712, 712') derart ausgebildet ist, dass er elektrisch mit dem Radachsenkit (210) verbindbar ist;
**gekennzeichnet durch**
einen Antriebsmechanismus (115, 315), der mit dem ersten Klemmarm (111, 911) zum Antreiben des ersten Klemmarms (111, 911) verbunden ist, wobei der erste Drehpunkt (1111) zwischen dem Antriebsmechanismus (115, 315) und der ersten Ausnehmung (111r, 716r, 911r) derart angeordnet ist, dass der von dem Antriebsmechanismus (115, 315) angetriebene erste Klemmarm (111, 911) um den ersten Drehpunkt (1111) drehen kann, um das Radachsenkit (210) eines Elektrofahrzeugs (200) in der ersten Ausnehmung (111r, 716r, 911r) zu fixieren.

2. Fixiervorrichtung (100, 100', 110, 110', 410, 610) nach Anspruch 1, **dadurch gekennzeichnet, dass** die Fixiervorrichtung (100, 100', 110, 110', 410, 610) ferner aufweist:
einen zweiten Klemmarm (114, 914) mit einer zweiten Ausnehmung (114r, 716r', 914r) und einem zweiten Drehpunkt (1141);
wobei der zweite Drehpunkt (1141) zwischen dem Antriebsmechanismus (115, 315) und der zweiten Ausnehmung (114r, 716r', 914r) derart angeordnet ist, dass der erste Klemmarm (111, 911) und der zweite Klemmarm (114, 914), die durch den Antriebsmechanismus (115, 315) angetrieben sind, um den ersten Drehpunkt (1111) beziehungsweise den zweiten Drehpunkt (1141) drehen können und danach das Radachsenkit (210) zwischen der ersten Ausnehmung (111r, 716r, 911r) und der zweiten Ausnehmung (114r, 716r', 914r) fixieren.

3. Fixiervorrichtung (100, 100', 110, 110', 410, 610) nach Anspruch 1, **dadurch gekennzeichnet, dass** die Fixiervorrichtung (100, 100', 110, 110', 410, 610) ferner aufweist:
einer Fixierbasis (614) mit einer zweiten Ausnehmung (114r, 716r', 914r), wobei die Fixierbasis (614) in Bezug auf den ersten Klemmarm (111, 911) stationär ist,
wobei der Antriebsmechanismus (115, 315) derart ausgebildet ist, dass er den ersten Klemmarm (111, 911) zum Klemmen eines Radachsenkits (210) eines Elektrofahrzeugs (200) zwischen der ersten Ausnehmung (111r, 716r, 911r) und der zweiten Ausnehmung (114r, 716r', 914r) antreibt.

4. Fixiervorrichtung (100, 100', 110, 110', 410, 610) nach einem der Ansprüche 1 bis 3, **dadurch gekennzeichnet, dass** der erste Klemmarm (111, 911) ein Gleitloch (lila) aufweist, und dass der leitfähige Bereich (112, 112', 712, 712') bewegbar in dem Gleitloch (lila) angeordnet ist.

5. Fixiervorrichtung (100, 100', 110, 110', 410, 610) nach Anspruch 4, **dadurch gekennzeichnet, dass** die Fixiervorrichtung (100, 100', 110, 110', 410, 610) ferner aufweist:
ein elastisches Element (113, 1131), das in dem Gleitloch (lila) angeordnet ist und mit dem leitfähigen Bereich und einer Bodenfläche des Gleitlochs (lila) verbunden ist.

6. Fixiervorrichtung (100, 100', 110, 110', 410, 610) nach den Ansprüchen 1 bis 5, **dadurch gekennzeichnet, dass** die Fixiervorrichtung (100, 100', 110, 110', 410, 610) ferner aufweist:
ein Isolierelement (116, 716, 716'), das an einer Wand der ersten Ausnehmung (111r, 716r, 911r) angeordnet ist, um den ersten Klemmarm (111, 911) gegen ein Radachsenkit (210) eines Elektrofahrzeugs (200) zu isolieren.

7. Fixiervorrichtung (100, 100', 110, 110', 410, 610) nach den Ansprüchen 1 bis 6, **dadurch gekennzeichnet, dass** die Fixiervorrichtung (100, 100', 110, 110', 410, 610) ferner aufweist:
eine elektrische Leitung, die mit dem leitfähigen Bereich (112, 112', 712, 712') und einer Ladestationssteuerung (130) verbunden ist.

8. Fixiervorrichtung (100, 100', 110, 110', 410, 610) nach den Ansprüchen 1 bis 7, **dadurch gekennzeichnet, dass** der Antriebsmechanismus (115, 315) ein Nocken ist.

9. Fixiervorrichtung (100, 100', 110, 110', 410, 610) nach Anspruch 2, **dadurch gekennzeichnet, dass** der Antriebsmechanismus (115, 315) ein Gestänge ist.

10. Fixiervorrichtung (100, 100', 110, 110', 410, 610) nach Anspruch 1, **dadurch gekennzeichnet, dass** die Fixiervorrichtung (100, 100', 110, 110', 410, 610) ferner aufweist:
einen zweiten Klemmarm (114, 914); und
einem zweiten elastischen Element (1132), das mit einer Innenseite des ersten Klemmarms (111, 911) und einer Innenseite des zweiten Klemmarms (114, 914) verbunden ist.

11. Fixiervorrichtung (100, 100', 110, 110', 410, 610) nach Anspruch 1, **dadurch gekennzeichnet, dass** die Fixiervorrichtung (100, 100', 110, 110', 410, 610) ferner aufweist:
einen zweiten Klemmarm (114, 914); und
einem elastischen Element (2133), das mit einer Außenseite des ersten Klemmarms (111, 911) verbunden ist; und
einem anderen elastischen Element (2134), das mit einer Außenseite des zweiten Klemmarms (114, 914) verbunden ist.

12. Fixiervorrichtung (100, 100', 110, 110', 410, 610) nach den Ansprüchen 1 bis 11, **dadurch gekennzeichnet, dass** ein Vorderende des ersten Klemmarms (111, 911) eine geneigte Seitenfläche (110s) aufweist, die einem Elektrofahrzeug (200) zugewandt ist.

13. Fixiervorrichtung (100, 100', 110, 110', 410, 610) nach den Ansprüchen 1 bis 12, **dadurch gekennzeichnet, dass** der erste Klemmarm (111, 911) ein bewegbares Isolierelement (716, 716') aufweist, in welchem die erste Ausnehmung (111r, 716r, 911r) angeordnet ist, und dass der leitfähige Bereich (112, 112', 712, 712') an dem Isolierelement (716, 716') angeordnet ist.

14. Fixiervorrichtung (100, 100', 110, 110', 410, 610) nach Anspruch 13, **dadurch gekennzeichnet, dass** das Isolierelement ein Gleitloch (lila) aufweist, in welchem der leitfähige Bereich (112, 112', 712, 712') angeordnet ist.

15. Ladesystem (100, 400, 500, 600, 700, 800), welches aufweist:
die Fixiervorrichtung (100, 100', 110, 110', 410, 610) nach einem der Ansprüche 1 bis 14;
einen Reifensensor (105), der dazu ausgebildet ist, zu erkennen, ob das Radachsenkit (210) des Elektrofahrzeugs (200) in den Bereich der ersten Ausnehmung (111r, 716r, 911r) des ersten Klemmarms (111, 911) der Fixiervorrichtung (100, 100', 110, 110', 410, 610) eintritt; und
eine Ladestationssteuerung (130), die elektrisch mit dem leitfähigen Bereich (112, 112', 712, 712') verbunden ist, wobei, wenn das Radachsenkit (210) in den Bereich der ersten Ausnehmung (111r, 716r, 911r) des ersten Klemmarms (111, 911) der Fixiervorrichtung eintritt, die Ladestationssteuerung (130) den Antriebsmechanismus (115, 315) zum Fixieren des Radachsenkits (210) in der ersten Ausnehmung (111r, 716r, 911r) steuert.

16. Ladesystem (100, 400, 500, 600, 700, 800) nach Anspruch 15, **dadurch gekennzeichnet, dass** der Sensor (105) ein mechanischer Schalter, ein optischer Sensor oder ein Ultraschallsensor ist.

17. Ladesystem (100, 400, 500, 600, 700, 800) nach Anspruch 15 oder 16, **dadurch gekennzeichnet, dass** das Ladesystem (100, 400, 500, 600, 700, 800) ferner aufweist:
einen Blockkörper (140) mit einer Vorderfläche;
wobei die Vorderfläche dem Elektrofahrzeug (200) zugewandt ist, wenn das Radachsenkit (210) des Elektrofahrzeugs (200) an dem ersten Klemmarm fixiert ist.

18. Ladesystem (100, 400, 500, 600, 700, 800) nach den Ansprüchen 15 bis 17, welches aufweist:
zwei der Fixiervorrichtungen nach einem der Ansprüche 1 bis 14;
wobei die beiden Fixiervorrichtungen derart angeordnet sind, dass jede Fixiervorrichtung zum Fixieren eines Radachsenkits ausgebildet ist, wobei jedes Radachsenkit an einem Ende der Fahrzeugachse angeordnet ist.

19. Radachsenkit (210), welches mit einer Fixiervorrichtung nach Anspruch 1 verbindbar ist, mit:
einer leitfähigen Abdeckung (211) zum Anordnen an einer Radachse und mit einer ersten Endfläche (211s1) und einer der ersten Endfläche (211s1) entgegengesetzten zweiten Endfläche (211s2);
wobei die leitfähige Abdeckung (211) ein erstes Durchgangsloch aufweist, das derart ausgebildet ist, dass die Radachse hindurchgehen kann, wobei der Innendurchmesser des ersten Durchgangslochs größer als der Außendurchmesser der Radachse ist, so dass die leitfähige Abdeckung in dem ersten Durchgangsloch gegen das physikalische Material der Radachse isoliert ist;
einer ersten Isolierscheibe (212), die an der ersten Endfläche (211s1) der leitfähigen Abdeckung (211) angeordnet ist, um die leitfähige Abdeckung (211) elektrisch gegen die Radachse zu isolieren;
einer zweiten Isolierscheibe (213), die an der zweiten Endfläche (211s2) der leitfähigen Abdeckung (211) angeordnet ist, um die leitfähige Abdeckung (211) elektrisch gegen die Radachse zu isolieren; und
einer elektrischen Übertragungsleitung, die elektrisch mit der leitfähigen Abdeckung (211) verbunden ist;
wobei die erste und die zweite Isolierscheibe dazu ausgebildet sind, die leitfähige Abdeckung durch Zentrieren derselben auf Abstand von der Fahrzeugachse zu halten.

20. Radachsenkit (210) nach Anspruch 19, **dadurch gekennzeichnet, dass** die leitfähige Abdeckung zylinderförmig oder kugelförmig ausgebildet ist.

21. Radachsenkit (210) nach den Ansprüchen 19 bis 20, **dadurch gekennzeichnet, dass** das Radachsenkit (210) ferner aufweist:
ein erstes Fixierelement; und
ein zweites Fixierelement;
wobei die erste Isolierscheibe dazu ausgebildet ist, die leitfähige Abdeckung gegen das erste Fixierelement zu isolieren, und wobei die zweite Isolierscheibe dazu ausgebildet ist, die leitfähige Abdeckung gegen das zweite Fixierelement zu isolieren.

22. Fixierverfahren, **gekennzeichnet durch** die folgenden Schritte:
Vorsehen des Ladesystems nach den Ansprüchen 15 bis 18;
Erkennen durch den Reifensensor (105), ob das Radachsenkit (210) des Elektrofahrzeugs (200) nach Anspruch 19 in den Bereich der ersten Ausnehmung (111r, 716r, 911r) des ersten Klemmarms (111, 911) der Fixiervorrichtung (100, 100', 110, 110', 410, 610) eintritt; und
Steuern des Antriebsmechanismus (115, 315) durch die Ladestationssteuerung, um das Radachsenkit (210) in der ersten Ausnehmung (111r, 716r, 911r) zu fixieren, wenn das Radachsenkit (210) in den Bereich der ersten Ausnehmung (111r, 716r, 911r) des ersten Klemmarms (111, 911) der Fixiervorrichtung eintritt.

23. Fixierverfahren nach Anspruch 22, **dadurch gekennzeichnet, dass** das Fixierverfahren ferner den folgenden Schritt aufweist:
Erkennen durch das Ladesystem, ob der leitfähige Bereich (112, 112', 712, 712') mit dem Radachsenkit (210) elektrisch verbunden ist.

24. Fixierverfahren nach Anspruch 22 oder 23, **dadurch gekennzeichnet, dass** das Fixierverfahren ferner die folgenden Schritte aufweist:
Erkennen durch das Ladesystem, ob ein Widerstand zwischen dem leitfähigen Bereich (112, 112', 712, 712') und dem Radachsenkit (210) geringer als ein vorbestimmter Wert ist, wenn der leitfähige Bereich (112, 112', 712, 712') mit dem Radachsenkit (210) elektrisch verbunden ist; und
Laden des Elektrofahrzeugs (200) durch das Ladesystem über das Radachsenkit (210), wenn der Widerstand geringer als der vorbestimmte Wert ist.

## Revendications

1. Dispositif de fixation (100, 100', 110, 110', 410, 610), destiné à fixer un équipement d'axe de roue (210), disposé sur un véhicule électrique (200), pour chargement, comprenant :
un premier bras de serrage (111, 911) comportant un premier évidement (111r, 716r, 911r) et un premier point d'appui tournant (1111) ;
une portion conductrice (112, 112', 712, 712') disposée au sein du premier évidement (111r, 716r, 911r), dans lequel la portion conductrice (112, 112', 712, 712') est configurée pour pouvoir être électriquement connectée à l'équipement d'axe de roue (210) ; **caractérisé par**
un mécanisme d'entraînement (115, 315) relié au premier bras de serrage (111, 911) pour entraîner le premier bras de serrage (111, 911) ; dans lequel le premier point d'appui tournant (1111) est situé entre le mécanisme d'entraînement (115, 315) et le premier évidement (111r, 716r, 911r), de sorte que le premier bras de serrage (111, 911) entraîné par le mécanisme d'entraînement (115, 315) est libre de tourner autour du premier point d'appui tournant (1111) pour fixer l'équipement d'axe de roue (210) d'un véhicule électrique (200) au sein du premier évidement (111r, 716r, 911r) .

2. Dispositif de fixation (100, 100', 110, 110', 410, 610) selon la revendication 1, **caractérisé en ce que** le dispositif de fixation (100, 100', 110, 110', 410, 610) comprend en outre :
un second bras de serrage (114, 914) ayant un second évidement (114r, 716r', 914r), et un second point d'appui tournant (1141) ;
dans lequel le second point d'appui tournant (1141) est situé entre le mécanisme d'entraînement (115, 315) et le second évidement (114r, 716r', 914r), de sorte que le premier bras de serrage (111, 911) et le second bras de serrage (114, 914) entraînés par le mécanisme d'entraînement (115, 315) soient libres de tourner autour du premier point d'appui tournant (1111) et du second point d'appui tournant (1141) respectivement pour fixer ensuite l'équipement d'axe de roue (210) entre le premier évidement (111r, 716r, 911r) et le second évidement (114r, 716r', 914r).

3. Dispositif de fixation (100, 100', 110, 110', 410, 610) selon la revendication 1, **caractérisé en ce que** le dispositif de fixation (100, 100', 110, 110', 410, 610) comprend en outre :
une base de fixation (614) ayant un second évidement (114r, 716r', 914r), dans lequel la base de fixation (614) est immobile par rapport au premier bras de serrage (111, 911),
dans lequel le mécanisme d'entraînement (115, 315) est configuré pour entraîner le premier bras de serrage (111, 911) pour serrer un équipement d'axe de roue (210) d'un véhicule électrique (200) entre le premier évidement (111r, 716r, 911r) et le second évidement (114r, 716r', 914r).

4. Dispositif de fixation (100, 100', 110, 110', 410, 610) selon les revendications 1 à 3, **caractérisé en ce que** le premier bras de serrage (111, 911) comporte un trou de coulissement (111a), et la portion conductrice (112, 112', 712, 712') est disposée avec faculté de déplacement au sein du trou de coulissement (111a).

5. Dispositif de fixation (100, 100', 110, 110', 410, 610) selon la revendication 4, **caractérisé en ce que** le dispositif de fixation (100, 100', 110, 110', 410, 610) comprend en outre :
un premier élément élastique (113, 1131) disposé au sein du trou de coulissement (111a) et relié à la portion conductrice et à une surface basse du trou de coulissement (111a).

6. Dispositif de fixation (100, 100', 110, 110', 410, 610) selon les revendications 1 à 5, **caractérisé en ce que** le dispositif de fixation (100, 100', 110, 110', 410, 610) comprend en outre :
un élément d'isolation (116, 716, 716') disposé sur une paroi du premier évidement (111r, 716r, 911r) pour isoler le premier bras de serrage (111, 911) d'un équipement d'axe de roue (210) d'un véhicule électrique (200).

7. Dispositif de fixation (100, 100', 110, 110', 410, 610) selon les revendications 1 à 6, **caractérisé en ce que** le dispositif de fixation (100, 100', 110, 110', 410, 610) comprend en outre :
un fil électrique connecté à la portion conductrice (112, 112', 712, 712') et à un contrôleur de borne de chargement (130).

8. Dispositif de fixation (100, 100', 110, 110', 410, 610) selon les revendications 1 à 7, **caractérisé en ce que** le mécanisme d'entraînement (115, 315) est une came.

9. Dispositif de fixation (100, 100', 110, 110', 410, 610) selon la revendication 2, **caractérisé en ce que** le mécanisme d'entraînement (115, 315) est un mécanisme de tringlerie.

10. Dispositif de fixation (100, 100', 110, 110', 410, 610) selon la revendication 1, **caractérisé en ce que** le dispositif de fixation (100, 100', 110, 110', 410, 610) comprend en outre :
un second bras de serrage (114, 914) ; et
un second élément élastique (1132) relié à un côté interne du premier bras de serrage (111, 911) et à un côté interne du second bras de serrage (114, 914).

11. Dispositif de fixation (100, 100', 110, 110', 410, 610) selon la revendication 1, **caractérisé en ce que** le dispositif de fixation (100, 100', 110, 110', 410, 610) comprend en outre :
un second bras de serrage (114, 914) ;
un élément élastique (2133) relié à un côté externe du premier bras de serrage (111, 911) ; et
un autre élément élastique (2134) relié à un côté externe du second bras de serrage (114, 914).

12. Dispositif de fixation (100, 100', 110, 110', 410, 610) selon les revendications 1 à 11, **caractérisé en ce qu'**une extrémité avant du premier bras de serrage (111, 911) a une surface latérale en oblique (110s) en regard d'un véhicule électrique (200).

13. Dispositif de fixation (100, 100', 110, 110', 410, 610) selon les revendications 1 à 12, **caractérisé en ce que** le premier bras de serrage (111, 911) comprend un élément d'isolation déplaçable (716, 716') sur lequel est disposé le premier évidement (111r, 716r, 911r), et la portion conductrice (112, 112', 712, 712') est disposée sur l'élément d'isolation (716, 716').

14. Dispositif de fixation (100, 100', 110, 110', 410, 610) selon la revendication 13, **caractérisé en ce que** l'élément d'isolation comporte un trou de coulissement (111a) au sein duquel est disposée la portion conductrice (112, 112', 712, 712').

15. Système de chargement (100, 400, 500, 600, 700, 800), comprenant :
le dispositif de fixation (100, 100', 110, 110', 410, 610) selon l'une des revendications 1 à 14 ;
un capteur de pneu (105) configuré pour capter si l'équipement d'axe de roue (210) du véhicule électrique (200) entre dans une portée du premier évidement (111r, 716r, 911r) du premier bras de serrage (111, 911) du dispositif de fixation (100, 100', 110, 110', 410, 610) ; et
un contrôleur de borne de chargement (130) connecté électriquement à la portion conductrice (112, 112', 712, 712'), dans lequel si l'équipement d'axe de roue (210) entre dans la portée du premier évidement (111r, 716r, 911r) du premier bras de serrage (111, 911) du dispositif de fixation, le contrôleur de borne de chargement (130) contrôle le mécanisme d'entraînement (115, 315) pour qu'il fixe l'équipement d'axe de roue (210) au sein du premier évidement (111r, 716r, 911r).

16. Système de chargement (100, 400, 500, 600, 700, 800) selon la revendication 15, **caractérisé en ce que** le capteur de pneu (105) est un contacteur mécanique, un capteur optique ou un capteur ultrasonore.

17. Système de chargement (100, 400, 500, 600, 700, 800) selon les revendications 15 ou 16, **caractérisé en ce que** le système de chargement (100, 400, 500, 600, 700, 800) comprend en outre :
un corps de bloc (140) ayant une surface avant ;
dans lequel la surface avant est en regard du véhicule électrique (200) si l'équipement d'axe de roue (210) du véhicule électrique (200) est fixé au premier bras de serrage.

18. Système de chargement (100, 400, 500, 600, 700, 800) selon les revendications 15 à 17, comprenant :
deux des dispositifs de fixation selon les revendications 1 à 14 ;
dans lequel les deux dispositifs de fixation sont disposés, de sorte que chaque dispositif de fixation soit configuré pour fixer un équipement d'axe de roue, dans lequel chaque équipement d'axe de roue est disposé à une extrémité de l'axe du véhicule.

19. Equipement d'axe de roue (210) pouvant être relié à un dispositif de fixation selon la revendication 1, comprenant :
un cache-conducteur (211) destiné à être disposé sur un axe de roue et ayant une première surface d'extrémité (211s1) et une seconde surface d'extrémité (211s2) opposée à la première surface d'extrémité (211s1) ;
le cache-conducteur (211) comporte un premier trou traversant configuré pour être traversé par l'axe de roue, moyennant quoi le diamètre intérieur du premier trou traversant est plus grand que le diamètre extérieur de l'axe de roue de sorte que le cache-conducteur dans le premier trou traversant soit isolé de la matière physique de l'axe de roue ;
une première rondelle isolante (212) disposée sur la première surface d'extrémité (211s1) du cache-conducteur (211) pour isoler électriquement le cache-conducteur (211) de l'axe de roue ;
une seconde rondelle isolante (213) disposée sur la seconde surface d'extrémité (211s2) du cache-conducteur (211) pour isoler électriquement le cache-conducteur (211) de l'axe de roue ; et
un fil émetteur électrique connecté électriquement au cache-conducteur (211) ;
les première et seconde rondelles isolantes sont configurées pour garder le cache-conducteur à distance, en le centrant, par rapport à l'axe du véhicule.

20. Equipement d'axe de roue (210) selon la revendication 19, **caractérisé en ce que** le cache-conducteur est conformé selon une forme de cylindre ou une forme de bille.

21. Equipement d'axe de roue (210) selon les revendications 19 et 20, **caractérisé en ce que** l'équipement d'axe de roue (210) comprend en outre :
un premier élément de fixation ; et
un second élément de fixation ;
dans lequel la première rondelle isolante est configurée pour isoler le cache-conducteur du premier élément de fixation, et la seconde rondelle isolante est configurée pour isoler le cache-conducteur du second élément de fixation.

22. Procédé de fixation, **caractérisé par** :
la fourniture du système de chargement selon les revendications 15 à 18 ;
le fait de capter, par le capteur de pneu (105), si l'équipement d'axe de roue (210) du véhicule électrique (200) selon la revendication 19 entre dans la portée du premier évidement (111r, 716r, 911r) du premier bras de serrage (111, 911) du dispositif de fixation (100, 100', 110, 110', 410, 610) ; et
le contrôle du mécanisme d'entraînement (115, 315), par le contrôleur de borne de charge, pour qu'il fixe l'équipement d'axe de roue (210) au sein du premier évidement (111r, 716r, 911r) si l'équipement d'axe de roue (210) entre dans la portée du premier évidement (111r, 716r, 911r) du premier bras de serrage (111, 911) du dispositif de fixation.

23. Procédé de fixation selon la revendication 22, **caractérisé en ce que** le procédé de fixation comprend en outre :
le fait de détecter, par le système de chargement, si la portion conductrice (112, 112', 712, 712') est électriquement connectée à l'équipement d'axe de roue (210).

24. Procédé de fixation selon la revendication 22 ou 23, **caractérisé en ce que** le procédé de fixation comprend en outre :
le fait de détecter, par le système de chargement, si une résistance entre la portion conductrice (112, 112', 712, 712') et l'équipement d'axe de roue (210) est inférieure à une valeur prédéterminée si la portion conductrice (112, 112', 712, 712') est électriquement connectée à l'équipement d'axe de roue (210) ; et
le chargement du véhicule électrique (200) par le système de chargement à travers l'équipement d'axe de roue (210) si la résistance est inférieure à la valeur prédéterminée.
